# EUROPÄISCHE PATENTSCHRIFT

(11) **EP 3 756 882 B1**
(45) Veröffentlichungstag und Bekanntmachung des Hinweises auf die Patenterteilung: **17.11.2021**
(21) Anmeldenummer: 19182209.7
(22) Anmeldetag: 25.06.2019
(51) Int. Cl.: B32B 17/10, C09J 7/00

(54) **FAHRZEUG-VERBUNDSCHEIBE MIT SENSORBEREICH UND KEILWINKELFÖRMIGER THERMOPLASTISCHER ZWISCHENSCHICHT IM SENSORBEREICH**
VEHICLE COMPOSITE DISC WITH SENSOR AREA AND CURVED THERMOPLASTIC INTERMEDIATE LAYER IN THE SENSOR AREA
VITRE COMPOSITE DE VÉHICULE POURVUE DE ZONE DE DÉTECTION ET COUCHE INTERMÉDIAIRE THERMOPLASTIQUE SOUS LA FORME D'ANGLE DE COUPE DANS LA ZONE DE DÉTECTION

(43) Veröffentlichungstag der Anmeldung: 30.12.2020
(73) Patentinhaber: SAINT-GOBAIN GLASS FRANCE, 92400 Courbevoie (FR)
(72) Erfinder: BORCHMANN, Nikolai, 52134 Herzogenrath (DE); BUTHMANN, Sascha, 52078 Aachen (DE); BREUER, Simon, 52499 Baesweiler (DE)
(74) Vertreter: Schönen, Iris

(56) Entgegenhaltungen:
- EP-A1- 1 800 855
- WO-A1-2019/064279
- DE-U1-202019 102 137
- US-A1- 2017 313 032

## Beschreibung

Die Erfindung betrifft eine Fahrzeug-Verbundscheibe, ein Verfahren zu ihrer Herstellung und ihre Verwendung.

Moderne Fahrzeuge werden mit einer steigenden Anzahl an optischen Sensoren ausgestattet, deren Signale zur Unterstützung des Fahrers verwendet werden. Beispiele solcher Sensoren sind Kameras wie Videokameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkante. Der Sensorbereich ist derjenige Bereich der Windschutzscheibe, durch den verlaufende Strahlung durch den Sensor detektiert wird. Der Sensorbereich der Windschutzscheibe ist also der Bereich, der im Detektionsstrahlengang des Sensors liegt.

Windschutzscheiben bestehen aus zwei Glasscheiben, welche über eine thermoplastische Zwischenschicht miteinander laminiert sind. In der Fahrpraxis kommt es beim Blick durch die Scheibe unter bestimmten Kontrastbedingungen zur Ausbildung von sogenannten Doppelbildern, was einen bekannten optischen Bildfehler darstellt. Der Fehler resultiert aus der Aufspaltung eines durch die Scheibe transmittierten Lichtstrahls als Folge von Mehrfachreflexionen im Scheibeninneren, wodurch auf der Netzhaut des Betrachters zwei Bilder eines Objektpunktes entstehen. Voraussetzung für die Wahrnehmbarkeit dieses Bildfehlers sind Kontrastbedingungen, die ein Abheben des Doppelbilds von der Umgebung ermöglichen. Insbesondere an gekrümmten Verbundscheiben, wie Windschutzscheiben, weichen die Bilder signifikant voneinander ab. Die Intensität des häufig als Geisterbild bezeichneten Doppelbilds ist zwar schwächer als die Intensität des primären Bilds, dennoch ist es für den Betrachter störend. Darüber hinaus werden auch optische Sensoren, wie beispielsweise eine hinter der Windschutzscheibe angebrachte Kamera, durch das Geisterbild beeinflusst. Insbesondere im Hinblick auf eine Weiterentwicklung des autonomen Fahrens, nimmt die Akzeptanz von in Transmission sichtbaren Geisterbildern auch innerhalb von Sensorbereichen ab und die einzuhaltenden Toleranzen für Sensorbereiche werden zunehmend enger.

Das Problem des Auftretens von Geisterbildern ist vor allem auf dem Gebiet der Head-Up-Displays (HUDs) wohlbekannt. HUDs umfassen einen Projektor, beispielsweise im Bereich des Armaturenbretts oder im Dachbereich, mit dem Bilder auf die Windschutzscheibe projiziert, dort reflektiert und vom Fahrer als virtuelles Bild (von ihm aus gesehen) hinter der Windschutzscheibe wahrgenommen werden. So können wichtige Informationen in das Blickfeld des Fahrers projiziert werden. Unerwünschte Geisterbilder werden auf dem Gebiet der HUDs bereits erfolgreich vermieden, indem die reflektierenden Scheibenoberflächen mit einem bewusst gewählten Winkel zueinander angeordnet werden, so dass Hauptbild und Geisterbild überlagert werden, wodurch das Geisterbild nicht mehr störend auffällt. Der Winkel beträgt bei herkömmlichen Verbundgläsern für Head-Up-Displays typischerweise etwa 0,5 mrad.

Sollen die Oberflächen der Glasscheiben wie beschrieben in einem Winkel angeordnet werden, so ist es üblich, eine thermoplastische Folie mit nicht-konstanter Dicke zu verwenden. Man spricht auch von einer keilförmigen Folie oder Keilfolie. Der Winkel zwischen den beiden Oberflächen der Folie wird als Keilwinkel bezeichnet. Verbundgläser für Head-Up-Displays mit Keilfolien sind beispielsweise aus EP1800855B1 oder EP1880243A2 bekannt. Auch WO 2019/064279 A1 offenbart eine Verbundscheibe für Fahrzeuge, deren Zwischenschicht einen Keilwinkel aufweist.

Derartige Keilfolien sind jedoch in ihrer Herstellung aufwändig und kostenintensiv. Vor diesem Hintergrund existieren Ansätze um den Einsatz von Keilfolien zu vermeiden. Beispielsweise wird in WO2017/153166A1 eine perforierte thermoplastische Verbundfolie eingesetzt, deren Perforierungen einen Größenverlauf aufweisen. Dadurch weist die Verbundfolie einen Massegradienten auf, der nach Lamination der Verbundscheibe und Verschmelzen der Folie in einer Verbundscheibe mit Keilwinkel resultiert. Solche Verfahren sind aufwändig.

Der vorliegenden Erfindung liegt die Aufgabe zugrunde, eine Fahrzeug-Verbundscheibe, in deren Sensorbereich das Auftreten von Geisterbildern vermindert ist, sowie ein Verfahren zu deren Herstellung und deren Verwendung bereitzustellen.

Die Aufgabe der vorliegenden Erfindung wird erfindungsgemäß durch eine Fahrzeug-Verbundscheibe gemäß Anspruch 1 gelöst. Bevorzugte Ausführungen gehen aus den Unteransprüchen hervor.

Die erfindungsgemäße Fahrzeug-Verbundscheibe umfasst mindestens eine Außenscheibe und eine Innenscheibe, die über eine thermoplastische Zwischenschicht miteinander verbunden sind. Die Fahrzeug-Verbundscheibe ist zur Abtrennung eines Fahrzeuginnenraums von einer äußeren Umgebung vorgesehen. Die Fahrzeug-Verbundscheibe ist also eine Fensterscheibe, die in eine Fensteröffnung der Fahrzeugkarosserie eingesetzt ist oder dafür vorgesehen ist. Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Die Außenscheibe weist eine Außenseite auf, die im Einbauzustand der äußeren Fahrzeugumgebung zugewandt ist. Die der Außenseite der Außenscheibe gegenüberliegende Oberfläche der Außenscheibe wird als Innenseite der Außenscheibe bezeichnet. Die Innenseite der Außenscheibe ist der Innenscheibe der Verbundscheibe zugewandt. Die Innenscheibe der Verbundscheibe weist ebenfalls eine Innenseite und eine Außenseite auf. Die Außenseite der Innenscheibe ist im Einbauzustand der Verbundscheibe in Richtung des Fahrzeuginnenraums orientiert. Die Innenseite der Innenscheibe weist in Richtung der Außenscheibe. Die Innenseite der Außenscheibe und die Innenseite der Innenscheibe sind über die thermoplastische Zwischenschicht miteinander verbunden. Die Fahrzeugverbundscheibe weist eine Dachkante und eine Motorkante auf, die zwei im Wesentlichen gegenüberliegende Scheibenkanten bezeichnen. Als Dachkante wird die in Einbaulage zum Fahrzeugdach weisende Oberkante der Verbundscheibe bezeichnet. Die Motorkante ist die der Dachkante (auch Oberkante) gegenüberliegende Unterkante, die dafür vorgesehen ist, in Einbaulage in Richtung der Bodenfläche des Fahrzeugs zu weisen. Im Fall einer Windschutzscheibe als Fahrzeug-Verbundscheibe ist die Motorkante, die an den Motorraum angrenzende Scheibenkante. Erfindungsgemäß ist zwischen der Innenseite der Außenscheibe und der Innenseite der Innenscheibe mindestens eine Einlage angebracht. Die Einlage ist außerhalb des Sensorbereichs, benachbart zum Sensorbereich, eingelegt und bewirkt eine lokale Dickenänderung der thermoplastischen Zwischenschicht innerhalb des Sensorbereichs. Die Dicke der thermoplastischen Zwischenschicht ist somit im vertikalen Verlauf zwischen der Dachkante und der Motorkante zumindest abschnittsweise innerhalb des Sensorbereichs veränderlich mit einem Keilwinkel α. Die erfindungsgemäße Einlage schafft somit einen keilwinkelförmigen Verlauf der thermoplastischen Zwischenschicht ohne kostenintensive Verwendung von Keilfolien. Darüber ist die Integration der Einlage in den Schichtstapel der Zwischenschicht einfach im Produktionsprozess zu bewerkstelligen.

Die mindestens eine Einlage bewirkt eine lokale Verdickung innerhalb der thermoplastischen Zwischenschicht. Die Einlage ist bevorzugt in einem Material ausgestaltet, dass im Autoklavprozess nicht aufschmilzt und demnach im Autoklavprozess nicht thermoplastisch fließt. Die thermoplastische Zwischenschicht umfasst eine oder mehrere Verbundfolien, die im Autoklavprozess thermoplastisch fließen. Die Außenscheibe und die Innenscheibe sind durch die thermoplastische Zwischenschicht miteinander verbunden. Damit ist gemeint, dass der Großteil der Zwischenschicht aus einem thermoplastischen, typischerweise polymeren Material ausgebildet ist und für die Haftung zwischen den Scheiben sorgt. Dieses thermoplastische Material ist flächig zwischen der Innenscheibe und der Außenscheibe angeordnet und aus mindestens einer thermoplastischen Verbundfolie ausgebildet. Die durch die Einlage eingebrachte lokale Dickenerhöhung bewirkt einen keilförmigen Hohlraum im Schichtstapel aus Scheiben und Zwischenschicht benachbart zu der Einlage. Der keilförmige Hohlraum wird bei Lamination der Verbundscheibe durch die thermoplastisch fließende Zwischenschicht gefüllt, wodurch in diesem Bereich eine keilförmige thermoplastische Zwischenschicht mit einem Keilwinkel α entsteht. Der Keilwinkel entsteht somit benachbart zur Einlage und nicht im Bereich der Einlage. Die Einlage liegt demnach außerhalb des Sensorfeldes und beeinträchtigt den Strahlengang nicht.

Eine zumindest abschnittsweise Dickenänderung im Sensorbereich bedeutet im Sinne der Erfindung, dass mindestens in einem Teilbereich des Sensorbereichs eine Dickenänderung mit einem Keilwinkel α vorliegt. Bevorzugt erstreckt sich die Dickenänderung mit einem Keilwinkel α zumindest über 50%, bevorzugt zumindest über 70%, besonders bevorzugt zumindest über 90 % des Sensorbereichs. Insbesondere liegt der Keilwinkel α im gesamten Sensorbereich vor. Dies ist vorteilhaft hinsichtlich einer möglichst optimalen Kompensation von Geisterbildern.

Als Keilwinkel α wird im Sinne der Erfindung der in dem betreffenden betrachteten Bereich vorliegende mittlere Keilwinkel bezeichnet, der als Mittelwert der effektiv in diesem Bereich messbaren Keilwinkel berechnet wird. Im Fall eines Keilwinkels, der über den gesamten Sensorbereich konstant ist, entspricht der betrachtete Bereich dem gesamten Sensorbereich. Auch konstante Keilwinkel verfügen über die dem Fachmann geläufigen geringfügigen Abweichungen, die beispielsweise durch Abweichungen in Produktion und Messverfahren bedingt sind. Bei variablen Keilwinkeln ist je nach Ausgestaltung eine kleinteiligere oder lokale Betrachtung des Keilwinkels notwendig.

Der Sensorbereich kann in Abhängigkeit von dem verwendeten Sensor beispielsweise eine runde, elliptische oder eckige Formgebung besitzen. Häufig liegt eine runde oder viereckige Formgebung vor. Der Sensorbereich verfügt über eine Oberkante, die der Dachkante der Verbundscheibe zugewandt ist, eine Unterkante, die in Richtung der Motorkante weist und zwei einander gegenüberliegende Seitenkanten, die jeweils zwischen Motorkante und Dachkante verlaufen. Im Fall runder oder elliptischer Formen wird zur Bestimmung der Kanten die entsprechende Tangente verwendet.

Der Bereich, in dem ein Keilwinkel α vorliegt, kann sich auch über den Sensorbereich hinaus erstrecken. Wenn beispielweise mehrere Sensorbereiche, in denen ein Keilwinkel mittels einer Einlage erzeugt werden soll, nebeneinander liegen, so kann die Einlage sich entlang beider Sensorbereiche und auch über den dazwischen liegenden Bereich der Verbundscheibe erstrecken. Dies ist vorteilhaft hinsichtlich einer vereinfachten Produktion. Die Positionierung einer einzelnen größeren Einlage erspart, im Vergleich zur Positionierung zweier einzelner Einlagen, einen Arbeitsschritt.

Die Einlage kann in Nachbarschaft zu einer beliebigen Kante des Sensorbereichs eingebracht werden. Die Kante, in deren Nachbarschaft die Einlage angebracht wird, ist in Abhängigkeit vom gewünschten Verlauf des Keilwinkels zu bestimmen. Die Einlage wird an der Kante angebracht, an der die größere Dicke der Zwischenschicht erforderlich ist. Als Kanten des Sensorbereichs werden die jeweiligen Abschnitte des Sensorbereichs bezeichnet, die nächstliegenden Scheibenkante am nächsten liegen. Im Falle eines runden oder ovalen Sensorbereichs wird eine daran anliegende Tangente betrachtet.

Bevorzugt nimmt die Dicke der thermoplastischen Zwischenschicht zwischen der Kante des Sensorbereichs, die den größten Abstand zur Einlage aufweist, und der Einlage zu und zwischen der Einlage und der nächstliegenden Scheibenkante ab. Die Einlage bewirkt eine Verdickung der Zwischenschicht, die sich dahingehend auf die umgebende Zwischenschicht auswirkt, dass deren Dicke mit steigendem Abstand zur Einlage bis hin zu der außerhalb des Einflussbereiches der Einlage vorliegenden Dicke der Zwischenschicht abnimmt. Ein derartiger Verlauf ist in der gesamten Umgebung der Einlage zu beobachten. Im erfindungsgemäßen Sinne genutzt wird dieser Effekt im Allgemeinen in dem zur Einlage benachbarten Bereich, in dem der Keilwinkel den gewünschten Verlauf besitzt. An zwei einander gegenüberliegenden Kanten der Einlage ist jeweils eine Dickenabnahme mit steigendem Abstand zur Einlage zu beobachten, wobei das Vorzeichen der in diesen Bereichen resultierenden Keilwinkel entgegengesetzt ist. Methoden zur Berechnung oder auch Simulation der zur Kompensationen von Geisterbildern in einer Scheibenanordnung benötigten Keilwinkel sind dem Fachmann bekannt.

Die Einlage ist bevorzugt außerhalb des als A-Sichtfeld nach der Regelung der Wirtschaftskommission der Vereinten Nationen für Europa ECE-R 43, Anhang 21, § 2.2 definierten Bereichs der Verbundscheibe angeordnet. Dies hat den Vorteil, dass die Einlage aus einer Vielzahl Materialien ausgewählt werden kann ohne Rücksicht auf eventuelle optische Störungen durch die Einlage, die im Sichtfeld des Fahrers nicht akzeptabel sind.

Besonders bevorzugt ist die Einlage benachbart zu der einer Scheibenkante nächstliegenden Kante des Sensorbereichs angeordnet, liegt also zwischen Sensorbereich und Scheibenkante. Dies ist im Hinblick auf einen größeren Abstand der Einlage zum Sichtbereich der Verglasung vorteilhaft. In einer vorteilhaften Ausführungsform wird der bei Fahrzeugverglasungen im Randbereich übliche Schwarzdruck bis in den Bereich der Einlage erweitert, so dass die Einlage für den Betrachter nicht sichtbar ist und vollständig kaschiert wird.

In einer bevorzugten Ausführungsform der Erfindung nimmt die Dicke der thermoplastischen Zwischenschicht zwischen der der Motorkante nächstliegenden Kante des Sensorbereichs und der Einlage zu und zwischen der Einlage und der Dachkante ab. Dabei ist die Einlage benachbart zu der der Dachkante nächstliegenden Kante des Sensorbereichs angeordnet, liegt also zwischen Sensorbereich und Dachkante. Der durch diesen Dickenverlauf resultierende Verlauf des Keilwinkels ist gut geeignet zur Kompensation von Geisterbildern. Welchen Betrag der Keilwinkel haben muss hängt von verschiedenen Faktoren, wie beispielsweise der Scheibendicke, insbesondere der Scheibendicke der Innenscheibe ab. Die Dicke der Außenscheibe hat zwar ebenfalls einen Einfluss, jedoch ist diese aufgrund der erforderlichen Steinschlagbeständigkeit wesentlich weniger variabel.

Der im Sensorbereich resultierende Keilwinkel α beträgt 0,3 mrad bis 2 mrad, bevorzugt 0,5 mrad bis 1,5 mrad, besonders bevorzugt 0,8 mrad bis 1,2 mrad. Keilwinkel in dieser Größenordnung sind insbesondere geeignet zur effektiven Kompensation von Geisterbildern. Der Betrag des zur Kompensation von Geisterbildern erforderlichen Keilwinkels ist experimentell, über Berechnungen und auch mittels Simulationsmethoden zugänglich und lässt sich bei bekannter Scheibengeometrie ermitteln. Mit der erfindungsgemäßen mindestens einen Einlage kann der gewünschte Keilwinkel auf einfache Art und Weise realisiert werden. Dabei lassen sich auch vergleichsweise große Keilwinkel mit geringem Aufwand herstellen, ohne dass auf kostenintensive Lösungen wie Keilfolien zurückgegriffen werden muss.

Bevorzugt ist die mindestens eine Einlage im Wesentlichen streifenförmig ausgebildet. Streifenförmig bedeutet im Sinne der Erfindung, dass die Einlage eine längliche Formgebung besitzt, wobei die Ausdehnung der Einlage entlang einer Seitenkante wesentlich größer ist als entlang der anderen Seitenkante. Dies hat den Vorteil, die Gesamtfläche der Einlage, also auch die Gesamtfläche innerhalb derer eine Dickenerhöhung eingebracht wird, möglichst gering zu halten. Dadurch werden unerwünschte Spannungen innerhalb der Verbundscheibe minimiert.

Die streifenförmige Einlage ist bevorzugt zwischen dem Sensorbereich und der Dachkante der Verbundscheibe angebracht und verläuft im Wesentlichen parallel oder tangential zur Oberkante des der Einlage zugeordneten Sensorbereichs. Als Oberkante des Sensorbereichs wird dabei die der Dachkante nächstliegende Kante des Sensorbereichs bezeichnet. Dadurch wird ein, im Einbauzustand der Scheibe betrachtet, in der Horizontalen ortsunabhängiger gleichmäßiger Verlauf des Keilwinkels erreicht. Dies ist vorteilhaft hinsichtlich einer gleichmäßigen Kompensation von Geisterbildern. Eine in einem größeren, von der Horizontalen abweichenden, Winkel zur Kante des Sensorbereichs verlaufende Einlage führt hingegen zu unterschiedlichen Keilwinkeln entlang einer Horizontalen, die parallel zur Dachkante der Verbundscheibe verläuft. Derartige Ausführungsformen sind anhand der Erfindung ebenfalls realisierbar, aber im Allgemeinen aufgrund der technischen Anforderungen nicht erwünscht. Die der Oberkante des Sensorbereichs parallele bzw. tangential verlaufende Einlage verläuft im Allgemeinen auch parallel zur Dachkante der Verbundscheibe.

Der Abstand zwischen der Dachkante der Verbundscheibe und der mindestens einen Einlage beträgt 10 mm bis 300 mm, bevorzugt 30 mm bis 200 mm, besonders bevorzugt 50 mm bis 150 mm. Innerhalb dieser Bereiche kann die Einlage einerseits besonders gut in den opaken Abdeckdruck der Fahrzeugverglasung integriert werden, andererseits sind in den entsprechenden Abschnitten der Scheibe häufig Sensorbereiche vorgesehen, auf die die Erfindung vorteilhaft angewandt werden kann.

Die Einlage wird in der Regel in einem Abstand von 0 mm bis 50 mm, bevorzugt 0 mm bis 20 mm, besonders bevorzugt 0 mm bis 10 mm zu dem Sensorbereich, in dem der Keilwinkel α erzeugt werden soll, eingebracht. Die Einlage erzeugt lediglich eine lokal begrenzte Dickenänderung mit einem Keilwinkel a, so dass der Abstand zwischen Einlage und Sensorbereich möglichst klein gehalten werden sollte, um den Bereich mit Keilwinkel α optimal auszunutzen. Dazu kann die Einlage auch unmittelbar an einer Kante, bevorzugt der Oberkante, des Sensorbereichs mit einem Abstand von 0 mm verlaufen. Je nach benötigter Größe des Sensorbereichs und insbesondere bei kleinen Sensorbereichen können auch größere Abstände gewählt werden. In jedem Fall sollte sichergestellt werden, dass die Einlage außerhalb des Sensorbereichs angeordnet ist um eine optische Beeinträchtigung des hinter der Windschutzscheibe montierten Sensors zu vermeiden. Damit dies auch im Rahmen der in der Produktion auftretenden Fertigungstoleranzen gewährleistet ist, wird in der Praxis häufig ein geringer Abstand, der allerdings größer als 0 mm ist, gewählt, beispielsweise zwischen 1 mm und 3 mm.

Die mindestens eine Einlage weist eine Dicke von 20 µm bis 150 µm, bevorzugt von 40 µm bis 100 µm, besonders bevorzugt von 50 µm bis 80 µm, auf. Die Dicke, in der die Einlage verwendet werden sollte, kann vom Fachmann anhand des benötigten Keilwinkels berechnet werden. Die genannten Bereiche beziehen sich auf die Gesamtdicke der Einlage, wobei bei sich überlappenden Einlagen die Einzeldicken zu addieren sind. Einlagen mit einer Dicke von maximal 150 µm sind einfach in eine Verbundscheibe zu integrieren, ohne dass es zu übermäßigen Spannungen kommt, die eine Beschädigung oder einen Bruch der Scheibe zur Folge haben können.

In einer Ausführungsform der Verbundscheibe verläuft die mindestens eine Einlage benachbart zur Oberkante und/oder Unterkante des Sensorbereichs und weist eine konstante Dicke auf. Dadurch entsteht entlang der Länge der Einlage im horizontalen Verlauf ein konstanter Keilwinkel in vertikaler Richtung im benachbarten Sensorbereich. Alternativ dazu könnte auch eine Einlage variabler Dicke verwendet werden, wodurch nicht nur ein Keilwinkel im vertikalen Verlauf erzielt wird, sondern auch im horizontalen Verlauf. Ein derartiger Keilwinkelverlauf wird in der Praxis jedoch selten benötigt.

In einer weiteren Ausführungsform der Verbundscheibe verläuft mindestens eine Einlage an einer oder beiden Seitenkanten des Sensorbereichs mit einer variable Dicke. Diese seitlichen Einlagen können einzeln oder in Kombination mit einer Einlage an der Ober- und/oder Unterkante vorgesehen werden. Die seitlichen Einlagen können beispielsweise genutzt werden um aus dem durch eine Einlage an der Ober- und/oder Unterkante induzierten konstanten Keilwinkel einen variablen Keilwinkel zu generieren. Dabei ist der Dickenverlauf innerhalb des Sensorbereichs nicht mehr in einer Richtung konstant abfallend, sondern steigt gegebenenfalls auch wieder an. Mittels einer solchen Ausführungsform sind nahezu alle in der Praxis relevanten Keilwinkelverläufe realisierbar.

Einlagen unterschiedlicher Dicken sind beispielsweise durch Verwendung entsprechend vorgefertigter Einlageelemente realisierbar, aus denen der Produktionsmitarbeiter die passende Dicke auswählt. Vorzugsweise werden dabei, insbesondere bei größeren Dicken, Einlageelemente verschiedener Dicken aufeinandergelegt bis der gewünschte Wert der Gesamtdicke erreicht ist. Dies hat den Vorteil, dass lediglich Einlagen in den gängigsten Dicken bereitgestellt werden müssen. Auch Einlagen mit variablen Dicken lassen sich aus einer Einlage konstanter Dicke, auf die in den gewünschten Bereichen zusätzliche Einlageelemente aufgebracht werden, zusammensetzen.

Die erfindungsgemäße Fahrzeug-Verbundscheibe kann eine oder mehrere Einlagen enthalten. Die Anzahl, Größe und Position der Einlagen ist unter anderem von der Anzahl und Position der Sensorbereiche abhängig, aber auch von der Komplexität des Keilwinkelverlaufs.

Bevorzugte Ausführungsformen sind beispielsweise wie folgt beschrieben. Eine Verbundscheibe mit einer Einlage konstanter Dicke, die im Wesentlichen parallel zur Dachkante verläuft und zwischen der Oberkante des Sensorbereichs und der Dachkante der Verbundscheibe liegt, ist insbesondere vorteilhaft für Sensorfenster in der Nähe der Dachkante der Verbundscheibe. Es entsteht ein konstanter Keilwinkel im Sensorbereich. Zusätzlich dazu kann eine solche Verbundscheibe eine weitere Einlage an der Unterkante des Sensorbereichs enthalten, wobei die Dicke dieser Einlage sich von der Dicke der Einlage an der Oberkante unterscheidet. Auf diese Weise kann der Dickenverlauf im Sensorbereich auch zwischen zwei beliebigen Werten, die durch die Dicken der Einlagen bestimmt werden, erfolgen. Darüber hinaus können zusätzlich zu der Einlage an der Oberkante auch Einlagen mit einer nicht konstanten Dicke an den Seitenkanten des Sensorfensters eingesetzt werden, die einen variablen Keilverlauf ermöglichen. Dabei ist optional auch eine Einlage an der Unterkante vorhanden.

Die mindestens eine Einlage ist an beliebiger Stelle zwischen der Innenseite der Innenscheibe und der Innenseite der Außenscheibe eingebracht. Dadurch besteht im Herstellungsprozess eine vorteilhaft hohe Flexibilität. Bevorzugt ist die Einlage auf der Innenseite der Außenscheibe, der Innenseite der Innenscheibe und/oder innerhalb der thermoplastischen Zwischenschicht, beispielsweise auf einer der thermoplastischen Verbundfolien der Zwischenschicht angebracht. Besonders bevorzugt ist die Einlage auf einer der Scheibeninnenseiten angebracht. Dies ist vorteilhaft hinsichtlich einer möglichst genauen Positionierung der Einlage. Die Folien der thermoplastischen Zwischenschicht werden hingegen mit einer gewissen Produktionstoleranz auf die Scheiben aufgelegt. Diese Produktionstoleranz addiert sich zu den bei Einlegen der Einlage selbst auftretenden Produktionstoleranzen. Das unmittelbare Aufbringen der Einlage auf eine der Scheiben ist somit die weniger fehlerbehaftete Variante.

Die erfindungsgemäße mindestens eine Einlage kann aus den verschiedensten Materialien gefertigt werden. Bevorzugt sind dabei Glas, polymere Folien und/oder ein Klebeband. Diese Materialien können auch in beliebigen Kombinationen verwendet werden, beispielsweise in Form einer Glaseinlage oder einer polymeren Folie, die mit einem Klebeband fixiert ist.

In einer möglichen Ausführungsform ist die Einlage eine polymere Folie umfassend eine Polyesterfolie. Diese verläuft im Autoklavprozess bei Lamination der Verbundscheibe nicht und bleibt somit vollständig in Position ohne eine Vermischung mit der umgebenden thermoplastischen Zwischenschicht zu zeigen. Polyesterfolien zeigen jedoch keine Haftung an Glas, so dass es zu geringfügigen Lufteinschlüssen kommen kann. Diese sind jedoch unerheblich solange die Einlage in einem nicht sichtbaren, beispielsweise durch opaken Abdeckdruck kaschierten, Bereich der Verbundscheibe liegt. Bevorzugt wird eine Polyethylenterepthalat (PET)-Folie eingesetzt.

In einer weiteren Ausführungsform ist die Einlage durch eine polymere Folie umfassend die für thermoplastische Verbundfolien gängigen Materialien gebildet. Insbesondere in Frage kommen dabei Folien aus Polyvinylbutyral (PVB), die auch in geringen Dicken von beispielsweise 50 µm kommerziell erhältlich sind. Diese sind im Gegensatz zu den üblichen thermoplastischen Verbundfolien weichmacherarm oder frei von Weichmachern. Dünne weichmacherarme PVB-Folien zeigen eine Anhaftung zu Glas und verbinden sich im Autoklavprozess mit thermoplastischen Verbundfolien, so dass Lufteinschlüsse vermieden werden.

In einer besonders bevorzugten Ausführungsform der Erfindung ist die mindestens eine Einlage ein Klebeband. Klebebänder sind aufgrund ihrer selbsthaftenden Wirkung besonders geeignet und verhindern ein Verrutschen der Einlage. Ferner ist die Applikation sehr einfach handhabbar und Lufteinschlüsse werden bei einer flächigen Auftragung zumindest an der adhäsiven Oberfläche des Klebebands verhindert. Das Klebeband wird insbesondere auf eine oder beide Innenseiten Scheiben aufgeklebt. Andere, nicht selbstklebende, Einlagen haben dabei den Nachteil, dass keine Fixierung am Glas besteht und diese im Produktionsprozess verrutschen können. Auch bei mehrteiligen Einlagen, die aus mehreren Einlageelementen verschiedener oder gleicher Dicke zusammengelegt sind, erweist sich die Verwendung von Klebeband als besonders vorteilhaft. Die mehrteilige Einlage kann unmittelbar auf der Scheibe aus verschiedenen Lagen zusammengesetzt werden, wobei keine weitere Fixierung notwendig ist.

Das Klebeband umfasst eine polymere Trägerfolie und eine Adhäsivschicht. Die polymere Trägerfolie ist dabei maßgeblich für die Dicke der Einlage verantwortlich, während die Adhäsivschicht die Verklebung mit dem Untergrund bewirkt.

Die polymere Trägerfolie enthält beispielsweise Polypropylen (PP) und/oder Polyvinylchlorid (PVC). Diese Kunststoffe sind besonders geeignet für die Herstellung von Klebebändern. Prinzipiell können jedoch beliebige Kunststoffe oder auch Gewebe eingesetzt werden.

Die Adhäsivschicht des Klebebandes umfasst bevorzugt einen Klebstoff aus der Gruppe der Acrylatklebstoffe, Schmelzklebstoffe und/oder Naturkautschukklebstoffe. Insbesondere Acrylatklebstoffe sind zur Herstellung von Klebebändern gut geeignet.

Die Außenscheibe und/oder die Innenscheibe weisen bevorzugt einen opaken Abdeckdruck auf. Abdeckdrucke sind für Fahrzeugscheiben außerhalb des zentralen Sichtbereichs üblich, um Anbauteile zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Bevorzugt umrahmt der Abdeckdruck auch den Sensorbereich der Verbundscheibe umlaufend, um den dahinterliegenden Sensor zu kaschieren. Auch die erfindungsgemäße mindestens eine Einlage wird dabei durch den opaken Abdeckdruck verdeckt.

Die Verbundscheibe ist insbesondere dafür vorgesehen und geeignet, dass ein Sensor an der Außenseite ihrer Innenscheibe befestigt wird. Dazu kann die von der Zwischenschicht abgewandte Oberfläche der Innenscheibe mit geeigneten Halterungen ausgestattet sein, beispielsweise mit einem *Bracket* oder Gehäuse. Der Bereich der Verbundscheibe, der im Detektionsstrahlengang des Sensors angeordnet ist beziehungsweise dafür vorgesehen ist, wird als Sensorbereich oder Sensorfenster bezeichnet. Strahlung, die im Sensorbereich durch die Verbundscheibe tritt, wird durch den Sensor detektiert. Die Einlage wird so angeordnet, dass der Keilwinkel α im Bereich des Sensorfensters vorliegt.

Die thermoplastische Zwischenschicht ist aus mindestens einer thermoplastischen Verbundfolie ausgebildet, bevorzugt enthaltend Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Folie beträgt bevorzugt von 0,2 mm bis 2 mm, besonders bevorzugt von 0,3 mm bis 1 mm, beispielsweise 0,38 mm, 0,76 mm, 0,81 mm oder 0,84 mm. Die Zwischenschicht kann auch aus mehreren übereinandergelegten Folien ausgebildet sein oder aus Schichten unterschiedlichen Materials ausgebildet sein, wie es beispielsweise bei Folien mit geräuschmindernden Eigenschaften der Fall ist. Die Einlage wird, sofern sie in der Zwischenschicht integriert werden soll, auf einer der Oberflächen der Verbundfolien angebracht. Wenn die thermoplastische Zwischenschicht aus mehreren Verbundfolien besteht, so kann die Einlage auch zwischen den Verbundfolien eingebracht werden. Die Verbundfolien sind in der Regel großflächig und durchgängig zwischen den Scheiben eingelegt, wobei die Verbundfolien auch im Bereich der Einlage flächenmäßig durchgehend verlaufen. Die Dicke der Zwischenschicht im Bereich der Einlage ergibt sich somit aus der Gesamtdicke der Einlage und der Dicke der thermoplastischen Verbundfolien.

Je nach Materialwahl der Einlage verbindet sich diese bei Lamination nicht mit angrenzenden Scheiben und/oder angrenzenden thermoplastischen Verbundfolien. Selbst wenn diese Materialien keine haftende Verbindung zueinander ausbilden, so wird die durch die Verbundfolien erreichte Stabilität der Verbundscheibe durch die Einlage nicht signifikant herabgesetzt. Die Einlagen werden durch die umgebende thermoplastische Zwischenschicht sicher fixiert.

Ein weiterer Aspekt der Erfindung ist eine Anordnung, umfassend eine erfindungsgemäße Fahrzeug-Verbundscheibe und einen daran angebrachten optischen Sensor, der an der von der Zwischenschicht abgewandten, innenraumseitigen Oberfläche der Innenscheibe befestigt ist und auf den Sensorbereich der Verbundscheibe, also den Bereich mit Keilwinkel α gerichtet ist. Der Detektionsstrahlengang des Sensors verläuft also im Sensorbereich durch die Verbundscheibe hindurch. Der optische Sensor ist bevorzugt eine optische Kamera, das heißt eine Kamera mit Empfindlichkeit im sichtbaren Spektralbereich, beispielsweise eine Fahrspur-Kamera oder eine Kamera für ein *Augmented* Reality-Head-Up-Display. In einer weiteren bevorzugten Ausführungsform ist der Sensor eine IR-Kamera, die Strahlung im infraroten Bereich des Spektrums detektiert.

Der Brechungsindex der Außenscheibe und der Innenscheibe ist bevorzugt gleich und beträgt bevorzugt von 1,4 bis 1,6, besonders bevorzugt von 1,5 bis 1,6 oder von 1,45 bis 1,55, insbesondere von 1,50 bis 1,55. Die Außenscheibe und Innenscheibe von Fahrzeug-Verbundscheiben bestehen typischerweise aus Kalk-Natron-Glas. Kalk-Natron-Glas weist Brechungsindizes von 1,5 bis 1,6 auf, insbesondere von 1,5 bis 1,55, beispielsweise 1,52. Es können grundsätzlich aber auch andere Glassorten verwendet werden, wie Borosilikatglas (Brechungsindex beispielsweise 1,47), Aluminosilikatglas (Brechungsindex beispielsweise 1,5) oder Quarzglas (Brechungsindex beispielsweise 1,46). Die Dicke der Außenscheibe und der Innenscheibe beträgt typischerweise von 0,5 mm bis 5 mm, bevorzugt von 1 mm bis 3 mm.

Die Außenscheibe, die Innenscheibe und/oder die Zwischenschicht können klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können aus nicht vorgespanntem, teilvorgespanntem oder vorgespanntem Glas bestehen.

Die Fahrzeugscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Die Erfindung umfasst außerdem ein Verfahren zur Herstellung einer Fahrzeug-Verbundscheibe, wobei
(a) eine Außenscheibe und eine Innenscheibe mit eine dazwischenliegenden thermoplastischen Zwischenschicht flächig aufeinander angeordnet werden, wobei mindestens eine Einlage auf der Innenseite der Innenscheibe, auf der Innenseite der Außenscheibe und/oder innerhalb der thermoplastischen Zwischenschicht angebracht wird und
(b) die Außenscheibe über die thermoplastische Zwischenschicht mit der Innenscheibe durch Lamination verbunden wird,
wobei in einem der Einlage benachbarten Bereich der Fahrzeug-Verbundscheibe ein Keilwinkel α der thermoplastischen Zwischenschicht entsteht.

Die mindestens eine Einlage ist insbesondere durch ein Klebeband gebildet. Dieses wird in Form von Rollenware bereitgestellt, mit der Klebefläche an der zu beklebenden Oberfläche angedrückt, abgerollt und sukzessive an der Oberfläche durch andrücken fixiert. Sofern im Bereich der Einlage vollflächig oder in Abschnitten der Einlage eine größere Dicke benötigt wird, so wird der Vorgang in diesen Bereichen wiederholt. Werden mehrere Einlagen in verschiedenen Bereichen benötigt, so können diese gleichzeitig oder nacheinander aufgetragen werden. Vorzugsweise wird die Einlage in Schritt a in Form eines Klebebands auf der Innenseite der Innenscheibe und/oder der Innenseite der Außenscheibe aufgeklebt.

Die thermoplastische Zwischenschicht umfasst außer der mindestens einen Einlage bevorzugt mindestens eine thermoplastische Verbundfolie. Die beiden Scheiben und die dazwischenliegende Verbundfolie mit mindestens einer Einlage werden natürlich flächig und im Wesentlichen kongruent übereinander angeordnet. Der Stapel wird anschließend üblichen Verfahren zur Erzeugung von Verbundscheiben unterworfen. Dabei wird die Außenscheibe über die thermoplastische Zwischenschicht, welche während des Verfahrens aus der mindestens einen thermoplastischen Verbundfolie mit den Einlagen gebildet wird, mit der Innenscheibe durch Lamination verbunden. Dies erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und/oder Druck.

Soll die Fahrzeug-Verbundscheibe eine Biegung aufweisen, wie insbesondere für Personenkraftwagen üblich, so werden die Scheiben vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Bevorzugt wird vor dem Laminieren und vor dem optionalen Biegen ein opaker Abdeckdruck auf den Randbereich der Außenscheibe und/oder der Innenscheibe aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die Erfindung umfasst außerdem die Verwendung einer erfindungsgemäßen Fahrzeug-Verbundscheibe als Windschutzscheibe eines Fahrzeugs, bevorzugt eines Kraftfahrzeugs. In einer bevorzugten Ausführung ist an der innenraumseitigen, von der Zwischenschicht abgewandten Oberfläche der Innenscheibe ein optischer Sensor befestigt, der auf den Bereich der Verbundscheibe mit dem durch die Einlage induzierten Keilwinkel α gerichtet ist und der eine optische, das heißt im sichtbaren Spektralbereich empfindliche Kamera ist, beispielsweise eine Fahrspur-Kamera oder eine Kamera für ein *Augmented Reality*-Head-Up-Display. In einer weiteren bevorzugten Ausgestaltung ist der Sensor eine IR-Kamera.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Fahrzeug-Verbundscheibe mit einer Einlage und Sensorbereich,
- Fig. 2: einen Querschnitt entlang der Schnittlinie AA' im Bereich Z der Fahrzeug-Verbundscheibe der Figur 1,
- Fig. 3: eine Konturendarstellung einer thermoplastischen Zwischenschicht mit Einlage,
- Fig. 4: ein Diagramm des Dickenverlaufs einer Verbundscheibe umfassend eine thermoplastische Zwischenschicht mit Einlage und
- Fig. 5: ein Flussdiagramm einer Ausführungsform des erfindungsgemäßen Verfahrens.

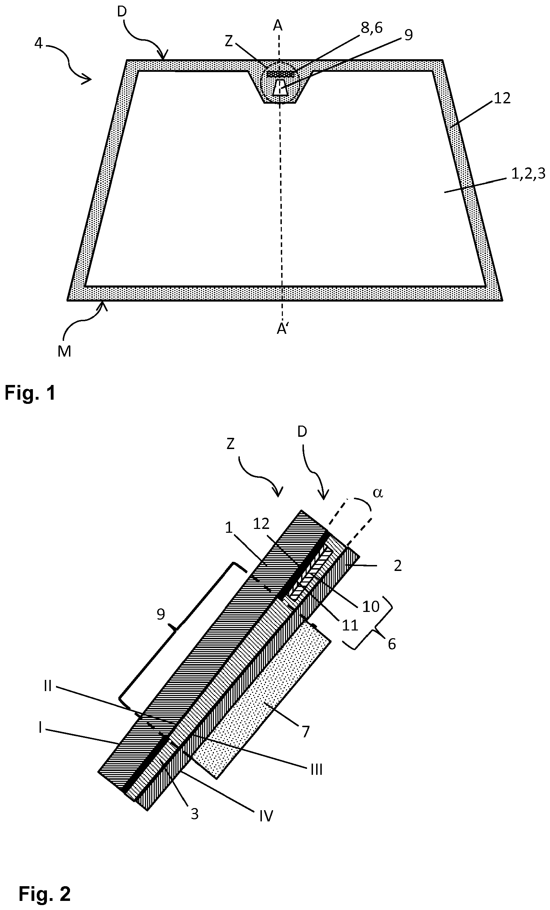

Figur 1 zeigt eine erfindungsgemäße Fahrzeug-Verbundscheibe 4, die als Windschutzscheibe eines Personenkraftwagens vorgesehen ist. Die Verbundscheibe ist aufgebaut aus einer Außenscheibe 1 und einer Innenscheibe 2, die mittels einer thermoplastischen Zwischenschicht 3 flächig miteinander verbunden sind. Die Außenscheibe 1 und die Innenscheibe 2 bestehen aus Kalk-Natron-Glas und weisen beispielsweise eine Dicke von 2,1 mm auf. Die thermoplastische Zwischenschicht 3 umfasst eine 0,76 mm dicke PVB-Folie als thermoplastische Verbundfolie. Die Innenscheibe 2 ist in Einbaulage dem Innenraum des Fahrzeugs zugewandt. Die Außenscheibe 1 ist in Einbaulage der äußeren Umgebung des Fahrzeugs zugewandt. Die Verbundscheibe weist eine Dachkante D und eine Motorkante M auf. Die Dachkante D weist in Einbaulage nach oben zum Fahrzeugdach, die Motorkante M weist in Einbaulage nach unten zum Motorraum. Die Fahrzeug-Verbundscheibe 4 weist einen trapezförmigen Sensorbereich 9 auf. Zwischen dem Sensorbereich 9 und der Dachkante der Verbundscheibe 4 ist eine Einlage 8 in Form eines Klebebands 6 angeordnet. Die Einlage verläuft im Wesentlichen parallel zur Dachkante D und zur Oberkante des Sensorbereichs 9. Die Einlage ist durch den opaken Abdeckdruck 12 kaschiert und somit für den Betrachter nicht sichtbar (in Figur 1 lediglich zur Erläuterung der Erfindung als sichtbar dargestellt).

Figur 2 zeigt einen Querschnitt der Fahrzeug-Verbundscheibe der Figur 1 im Bereich Z entlang der Schnittlinie AA'. Die Innenseite II der Außenscheibe 1 ist über die thermoplastische Zwischenschicht 3 mit der Innenseite III der Innenscheibe 2 verbunden. Die Außenseite I der Außenscheibe 1 ist der Umgebung zugewandt, während die Außenseite IV der Innenscheibe 2 zum Fahrzeuginnenraum weist. An der Außenseite IV der Innenscheibe 2 ist eine Kamera 7 in einem Gehäuse angeordnet. Die Kamera ist beispielsweise eine Fahrspurkamera. Die Detektionsrichtung der Kamera 7 ist außenseitig der Verbundscheibe in etwa horizontal nach vorne gerichtet. Strahlung, die im Sensorbereich 9 durch die Verbundscheibe 4 tritt, wird durch die Kamera 7 detektiert. Das Klebeband 6 der Einlage 8 umfasst eine Adhäsivschicht 11 in Form eines Acrylatklebstoffs und eine polymere Trägerfolie 10 aus Polypropylen. Das Klebeband 6 ist über die Adhäsivschicht 11 an der Innenseite II der Außenscheibe 1 fixiert und wird so in Position gehalten. Die Einlage verursacht eine lokale Dickenerhöhung der Verbundscheibe, wodurch in dem zur Einlage 8 benachbarten Sensorbereich 9 ein Keilwinkel α zwischen der Innenseite II der Außenscheibe 1 und der Innenseite III der Innenscheibe 2 induziert wird.

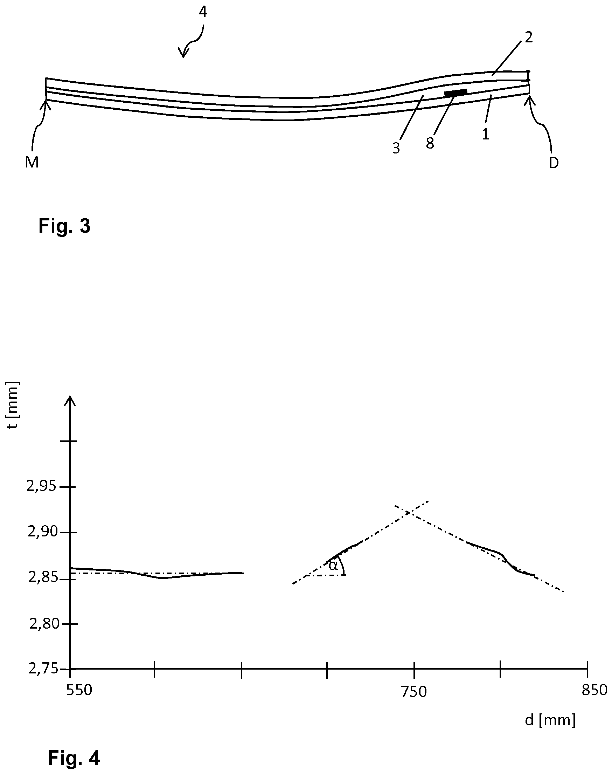

Figur 3 zeigt einen schematischen Konturenverlauf einer Fahrzeug-Verbundscheibe 4 umfassend eine Außenscheibe 1, eine Innenscheibe 2, eine thermoplastische Zwischenschicht 3 und eine an der Innenseite der Außenscheibe 1 befindliche Einlage 8 im Verlauf zwischen der Motorkante M und der Dachkante D. Die schematische Darstellung verdeutlicht die bei Windschutzscheiben typische Krümmung der Scheiben, sowie die (nicht maßstabsgetreu) gezeigte lokale Dickenerhöhung durch die Einlage 8.

Figur 4 zeigt ein Diagramm des Dickenverlaufs der Dicke t einer Verbundscheibe als Windschutzscheibe umfassend eine thermoplastische Zwischenschicht mit Einlage. Geeignete Methoden zur Messung von Dickenprofilen einer Windschutzscheibe sind dem Fachmann bekannt. Die Dicke t in mm wurde vertikal ausgehend von der Motorkante M der Verbundscheibe bis zur Dachkante D gemessen, wobei die Dachkante D im Diagramm bei d = 850 mm liegt. Die Motorkante M befindet sich bei d = 0 mm und ist im Diagramm nicht gezeigt. Ein Kurvenverlauf der Messwerte ist als durchgehende Linie eingezeichnet, während die interpolierten sowie extrapolierten Linien als nicht durchgehende gestrichelte Linien abgebildet sind. In einem Abstand von 750 mm von der Motorkante ist eine Einlage in Form eines Klebebands mit einer Dicke von 65 µm vor Laminieren der Verbundscheibe auf der Innenseite II der Außenscheibe 1 aufgetragen worden. Figur 4 stellt den Dickenverlauf der Verbundscheibe nach Lamination dar. Der daraus resultierende lokale Keilwinkel α ist im Diagramm klar erkennbar. Im vorliegenden Fall konnte mit einem Klebenband der Dicke 65 µm ein Keilwinkel von α = 1 mrad erreicht werden. Der Effekt der lokalen Dickenänderung durch die Einlage ist in einem umliegenden Bereich von ungefähr 60 mm erkennbar. Dies entspricht der typischen Größenordnung von Sensorbereichen.

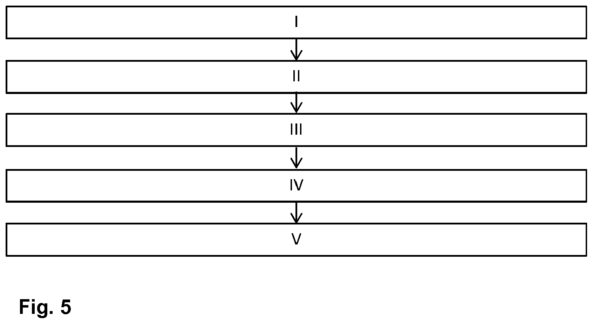

Figur 5 zeigt ein Flussdiagramm eines Ausführungsbeispiels des erfindungsgemäßen Verfahrens zur Herstellung einer Fahrzeug-Verbundscheibe umfassend die Schritte:
I Bereitstellen einer Außenscheibe 1 mit einer Außenseite I und einer Innenseite II,
II Aufbringen mindestens einer Einlage 8 auf die Innenseite II der Außenscheibe 1,
III Auflegen mindestens einer thermoplastischen Verbundfolie als thermoplastische Zwischenschicht 3 auf die Einlage 8 und die Innenseite II der Außenscheibe 1,
IV Auflegen einer Innenscheibe 2 einer Innenseite III und einer Außenseite IV, wobei die Innenseite III in Richtung der thermoplastischen Zwischenschicht 3 ausgerichtet ist,
V Autoklavieren der Anordnung zu einer Verbundscheibe 4.

### Bezugszeichenliste:

- (1): Außenscheibe
- (2): Innenscheibe
- (3): thermoplastische Zwischenschicht
- (4): Fahrzeug-Verbundscheibe
- (6): Klebeband
- (7): Sensor / Kamera
- (8): Einlage
- (9): Sensorbereich
- (10): polymere Trägerfolie
- (11): Adhäsivschicht
- (12): opaker Abdeckdruck

- (α): Keilwinkel

- D: Oberkante/Dachkante der Verbundscheibe
- M: Unterkante/Motorkante der Verbundscheibe

- A-A': Schnittlinie
- Z: Ausschnitt
- d: Abstand zur Motorkante
- t: Dicke der Verbundscheibe

## Patentansprüche

1. Fahrzeug-Verbundscheibe mit Sensorbereich (9) mindestens umfassend eine Außenscheibe (1) mit einer Außenseite (I) und einer Innenseite (II), eine Innenscheibe (2) mit einer Innenseite (III) und einer Außenseite (IV), wobei die Innenseite (II) der Außenscheibe (1) und die Innenseite (III) der Innenscheibe (2) über eine thermoplastische Zwischenschicht (3) miteinander verbunden sind, eine Dachkante (D) und eine Motorkante (M),
wobei zwischen der Innenseite (II) der Außenscheibe (1) und der Innenseite (III) der Innenscheibe (2) mindestens eine Einlage (8) angebracht ist, die außerhalb des Sensorbereichs (9) liegt und eine lokale Dickenänderung der thermoplastischen Zwischenschicht (3) innerhalb des Sensorbereichs (9) bewirkt, so dass die Dicke der thermoplastischen Zwischenschicht (3) im vertikalen Verlauf zwischen der Dachkante (D) und der Motorkante (M) zumindest abschnittsweise innerhalb des Sensorbereichs (9) veränderlich ist mit einem Keilwinkel (α).

2. Fahrzeug-Verbundscheibe nach Anspruch 1, wobei die Dicke der thermoplastischen Zwischenschicht (3) zwischen der der Motorkante (M) nächstliegenden Kante des Sensorbereichs (9) und der Einlage (8) zunimmt und zwischen der Einlage (8) und der Dachkante (D) abnimmt.

3. Fahrzeug-Verbundscheibe nach Anspruch 1 oder 2, wobei der Keilwinkel (a) im Sensorbereich (9) 0,3 mrad bis 2 mrad, bevorzugt 0,5 mrad bis 1,5 mrad, besonders bevorzugt 0,8 mrad bis 1,2 mrad beträgt.

4. Fahrzeug-Verbundscheibe nach einem der Ansprüche 1 bis 3, wobei die mindestens eine Einlage (8) im Wesentlichen streifenförmig ausgebildet ist und zwischen dem Sensorbereich (9) und der Dachkante (D) der Verbundscheibe im Wesentlichen parallel oder tangential zu dem der Einlage (8) zugehörigen Sensorbereich (9) verläuft.

5. Fahrzeug-Verbundscheibe nach einem der Ansprüche 1 bis 4, wobei der Abstand zwischen Dachkante (D) der Verbundscheibe und der mindestens einen Einlage (8) 10 mm bis 300 mm, bevorzugt 30 mm bis 200 mm, besonders bevorzugt 50 mm bis 150 mm, beträgt.

6. Fahrzeug-Verbundscheibe nach einem der Ansprüche 1 bis 5, wobei die mindestens eine Einlage (8) eine Dicke von 20 µm bis 150 µm, bevorzugt von 40 µm bis 100 µm, besonders bevorzugt von 50 µm bis 80 µm, aufweist.

7. Fahrzeug-Verbundscheibe nach einem der Ansprüche 1 bis 6, wobei die Einlage (8) Glas, polymere Folien und/oder ein Klebeband (6) umfasst und die mindestens eine Einlage (8) auf der Innenseite (II) der Außenscheibe (1), der Innenseite (III) der Innenscheibe (2) und/oder innerhalb der thermoplastischen Zwischenschicht (3) angebracht ist.

8. Fahrzeug-Verbundscheibe nach Anspruch 7, wobei die Einlage (8) ein Klebeband (6) umfasst, das auf der Innenseite (II) der Außenscheibe (1) und/oder der Innenseite (III) der Innenscheibe (2) aufgeklebt ist und eine polymere Trägerfolie (10) und eine Adhäsivschicht (11) umfasst.

9. Fahrzeug-Verbundscheibe nach Anspruch 8, wobei die polymere Trägerfolie (10) Polypropylen (PP) und/oder Polyvinylchlorid (PVC) enthält und die Adhäsivschicht (11) einen Klebstoff aus der Gruppe der Acrylatklebstoffe, Schmelzklebstoffe und/oder Naturkautschukklebstoffe umfasst.

10. Fahrzeug-Verbundscheibe nach einem der Ansprüche 1 bis 9, wobei die Verbundscheibe im Bereich der Einlage (8) einen opaken Abdeckdruck (12) aufweist.

11. Fahrzeug-Verbundscheibe nach einem der Ansprüche 1 bis 10, wobei an der Außenseite (IV) der Innenscheibe (2) ein optischer Sensor (7) befestigt ist, der auf den Sensorbereich (9) der Verbundscheibe mit dem Keilwinkel (a) gerichtet ist.

12. Fahrzeug-Verbundscheibe nach einem der Ansprüche 1 bis 11, wobei die thermoplastische Zwischenschicht (3) zumindest eine erste thermoplastische Verbundfolie (4) umfasst, die Polyvinylbutyral (PVB), Ethylenvinylacetat (EVA), Polyurethan (PU) oder Gemische oder Copolymere oder Derivate davon, bevorzugt PVB, enthält.

13. Verfahren zur Herstellung einer Fahrzeug-Verbundscheibe nach einem der Ansprüche 1 bis 12, wobei
(a) eine Außenscheibe (1) und eine Innenscheibe (2) mit einer dazwischenliegenden thermoplastischen Zwischenschicht (3) flächig aufeinander angeordnet werden, wobei mindestens eine Einlage (8) auf der Innenseite (III) der Innenscheibe (2), auf der Innenseite (II) der Außenscheibe (4) und/oder innerhalb der thermoplastischen Zwischenschicht (3) angebracht wird und
(b) die Außenscheibe (1) über die thermoplastische Zwischenschicht (3) mit der Innenscheibe (2) durch Lamination verbunden wird,
wobei in einem der Einlage (8) benachbarten Bereich der Fahrzeug-Verbundscheibe ein Keilwinkel α der thermoplastischen Zwischenschicht (3) entsteht.

14. Verfahren nach Anspruch 13, wobei die Einlage (8) ein Klebeband (6) ist, das in Schritt a) auf die Innenseite (II) der Außenscheibe (1) oder die Innenseite (III) der Innenscheibe (2) aufgeklebt wird.

15. Verwendung einer Fahrzeug-Verbundscheibe nach einem der Ansprüche 1 bis 12 als Windschutzscheibe eines Fahrzeugs, wobei an der Außenseite (IV) der Innenscheibe (2) ein optischer Sensor (7) befestigt ist, der auf den Sensorbereich (9) der Verbundscheibe mit dem Keilwinkel (α) gerichtet ist und der eine optische Kamera ist.

## Claims

1. Vehicle composite pane with a sensor region (9) at least comprising an outer pane (1) with an outer side (I) and an inner side (II), an inner pane (2) with an inner side (III) and an outer side (IV), wherein the inner side (II) of the outer pane (1) and the inner side (III) of the inner pane (2) are joined to one another via a thermoplastic intermediate layer (3), a roof edge (D) and an engine edge (M),
wherein at least one insert (8) that lies outside the sensor region (9) and causes a local change in thickness of the thermoplastic intermediate layer (3) within the sensor region (9) is attached between the inner side (II) of the outer pane (1) and the inner side (III) of the inner pane (2) such that the thickness of the thermoplastic intermediate layer (3) is variable with a wedge angle (α) in the vertical course between the roof edge (D) and the engine edge (M) at least in sections within the sensor region (9).

2. Vehicle composite pane according to claim 1, wherein the thickness of the thermoplastic intermediate layer (3) increases between the edge of the sensor region (9) nearest the engine edge (M) and the insert (8) and decreases between the insert (8) and the roof edge (D).

3. Vehicle composite pane according to claim 1 or 2, wherein the wedge angle (α) in the sensor region (9) is 0.3 mrad to 2 mrad, preferably 0.5 mrad to 1.5 mrad, particularly preferably 0.8 mrad to 1.2 mrad.

4. Vehicle composite pane according to one of claims 1 through 3, wherein the at least one insert (8) is substantially strip-shaped and runs between the sensor region (9) and the roof edge (D) of the composite pane substantially parallel or tangential to the sensor region (9) associated with the insert (8).

5. Vehicle composite pane according to one of claims 1 through 4, wherein the distance between the roof edge (D) of the composite pane and the at least one insert (8) is 10 mm to 300 mm, preferably 30 mm to 200 mm, particularly preferably 50 mm to 150 mm.

6. Vehicle composite pane according to one of claims 1 through 5, wherein the at least one insert (8) has a thickness of from 20 µm to 150 µm, preferably from 40 µm to 100 µm, particularly preferably from 50 µm to 80 µm.

7. Vehicle composite pane according to one of claims 1 through 6, wherein the insert (8) comprises glass, polymeric films, and/or an adhesive tape (6), and the at least one insert (8) is attached on the inner side (II) of the outer pane (1), the inner side (III) of the inner pane (2), and/or within the thermoplastic intermediate layer (3).

8. Vehicle composite pane according to claim 7, wherein the insert (8) comprises an adhesive tape (6) that is adhered on the inner side (II) of the outer pane (1) and/or the inner side (III) of the inner pane (2) and comprises a polymeric carrier film (10) and an adhesive layer (11).

9. Vehicle composite pane according to claim 8, wherein the polymeric carrier film (10) contains polypropylene (PP) and/or polyvinyl chloride (PVC) and the adhesive layer (11) comprises an adhesive from the group of acrylate adhesives, hot-melt adhesives, and/or natural rubber adhesives.

10. Vehicle composite pane according to one of claims 1 through 9, wherein the composite pane has an opaque masking print (12) in the region of the insert (8).

11. Vehicle composite pane according to one of claims 1 through 10, wherein an optical sensor (7) that is directed toward the sensor region (9) of the composite pane with the wedge angle (α) is fastened on the outer side (IV) of the inner pane (2).

12. Vehicle composite pane according to one of claims 1 through 11, wherein the thermoplastic intermediate layer (3) comprises at least one first thermoplastic composite film (4) that contains polyvinyl butyral (PVB), ethylene vinyl acetate (EVA), polyurethane (PU), or mixtures or copolymers or derivatives thereof, preferably PVB.

13. Method for producing a vehicle composite pane according to one of claims 1 through 12,
wherein
(a) an outer pane (1) and an inner pane (2) with a thermoplastic intermediate layer (3) positioned therebetween are arranged flat atop one another, wherein at least one insert (8) is attached on the inner side (III) of the inner pane (2), on the inner side (II) of the outer pane (4), and/or within the thermoplastic intermediate layer (3), and
(b) the outer pane (1) is joined by lamination to the inner pane (2) via the thermoplastic intermediate layer (3),
wherein a wedge angle α of the thermoplastic intermediate layer (3) is created in a region of the vehicle composite pane adjacent the insert (8).

14. Method according to claim 13, wherein the insert (8) is an adhesive tape (6) that is adhered in step a) on the inner side (II) of the outer pane (1) or the inner side (III) of the inner pane (2).

15. Use of a vehicle composite pane according to one of claims 1 through 12 as a windshield of a vehicle, wherein an optical sensor (7) that is an optical camera and is directed toward the sensor region (9) of the composite pane with the wedge angle (α) is fastened on the outer side (IV) of the inner pane (2).

## Revendications

1. Vitre composite de véhicule avec zone de détection (9), comportant au moins une vitre extérieure (1) avec un côté extérieur (I) et un côté intérieur (II), une vitre intérieure (2) avec un côté intérieur (III) et un côté extérieur (IV), le côté intérieur (II) de la vitre extérieure (1) et le côté intérieur (III) de la vitre intérieure (2) étant reliés l'un à l'autre par une couche intermédiaire thermoplastique (3), un bord côté toit (D) et un bord côté moteur (M),
dans laquelle, entre le côté intérieur (II) de la vitre extérieure (1) et le côté intérieur (III) de la vitre intérieure (2), est mis en place au moins un insert (8) qui se trouve à l'extérieur de la zone de détection (9) et qui provoque une modification locale d'épaisseur de la couche intermédiaire thermoplastique (3) à l'intérieur de la zone de détection (9), de telle sorte que l'épaisseur de la couche intermédiaire thermoplastique (3) varie avec un angle de coin (α) à l'intérieur de la zone de détection (9) au moins par sections dans l'étendue verticale entre le bord côté toit (D) et le bord côté moteur (M).

2. Vitre composite de véhicule selon la revendication 1, dans laquelle l'épaisseur de la couche intermédiaire thermoplastique (3) augmente entre le bord de la zone de détection (9) le plus proche du bord côté moteur (M) et l'insert (8) et diminue entre l'insert (8) et le bord côté toit (D).

3. Vitre composite de véhicule selon l'une des revendications 1 ou 2, dans lequel l'angle de coin (a) dans la zone de détection (9) est de 0,3 mrad à 2 mrad, de préférence de 0,5 mrad à 1,5 mrad, de manière particulièrement préférée de 0,8 mrad à 1,2 mrad.

4. Vitre composite de véhicule selon l'une des revendications 1 à 3, dans laquelle ledit au moins un insert (8) est configuré sensiblement en forme de bande et s'étend entre la zone de détection (9) et le bord côté toit (D) de la vitre composite sensiblement parallèlement ou tangentiellement à la zone de détection (9) associée à l'insert (8).

5. Vitre composite de véhicule selon l'une des revendications 1 à 4, dans laquelle la distance entre le bord côté toit (D) de la vitre composite et ledit au moins un insert (8) est de 10 mm à 300 mm, de préférence de 30 mm à 200 mm, de manière particulièrement préférée de 50 mm à 150 mm.

6. Vitre composite de véhicule selon l'une des revendications 1 à 5, dans laquelle ledit au moins un insert (8) présente une épaisseur de 20 µm à 150 µm, de préférence de 40 µm à 100 µm, de manière particulièrement préférée de 50 µm à 80 µm.

7. Vitre composite de véhicule selon l'une des revendications 1 à 6, dans laquelle l'insert (8) comporte du verre, des feuilles polymères et/ou une bande adhésive (6) et ledit au moins un insert (8) est appliqué sur le côté intérieur (II) de la vitre extérieure (1), le côté intérieur (III) de la vitre intérieure (2) et/ou à l'intérieur de la couche intermédiaire thermoplastique (3).

8. Vitre composite de véhicule selon la revendication 7, dans laquelle l'insert (8) comporte une bande adhésive (6) qui est collée sur le côté intérieur (II) de la vitre extérieure (1) et/ou le côté intérieur (III) de la vitre intérieure (2) et comporte une feuille de support polymère (10) et une couche adhésive (11).

9. Vitre composite de véhicule selon la revendication 8, dans laquelle la feuille de support polymère (10) contient du polypropylène (PP) et/ou du poly(chlorure de vinyle) (PVC) et la couche adhésive (11) comporte un adhésif du groupe des adhésifs acrylates, des adhésifs thermofusibles et/ou des adhésifs à base de caoutchouc naturel.

10. Vitre composite de véhicule selon l'une des revendications 1 à 9, dans laquelle la vitre composite présente une impression de recouvrement opaque (12) dans la région de l'insert (8).

11. Vitre composite de véhicule selon l'une des revendications 1 à 10, dans laquelle, sur le côté extérieur (IV) de la vitre intérieure (2), est fixé un détecteur optique (7) qui est orienté vers la zone de détection (9) de la vitre composite avec l'angle de coin (α).

12. Vitre composite de véhicule selon l'une des revendications 1 à 11, dans laquelle la couche intermédiaire thermoplastique (3) comporte au moins une première feuille composite thermoplastique (4) qui contient du poly(butyral vinylique) (PVB), de l'éthylène-acétate de vinyle (EVA), du polyuréthane (PU) ou des mélanges ou copolymères ou dérivés de ceux-ci, de préférence du PVB.

13. Procédé de fabrication d'une vitre composite de véhicule selon l'une quelconque des revendications 1 à 12, dans lequel:
(a) une vitre extérieure (1) et une vitre intérieure (2) avec une couche intermédiaire thermoplastique (3) située entre elles sont disposées à plat l'une sur l'autre, au moins un insert (8) étant appliqué sur le côté intérieur (III) de la vitre intérieure (2), sur le côté intérieur (II) de la vitre extérieure (4) et/ou à l'intérieur de la couche intermédiaire thermoplastique (3) ; et
(b) la vitre extérieure (1) est reliée par stratification à la vitre intérieure (2) par la couche intermédiaire thermoplastique (3),
un angle de coin α de la couche intermédiaire thermoplastique (3) étant créé dans une zone de la vitre composite de véhicule adjacente à l'insert (8).

14. Procédé selon la revendication 13, dans lequel l'insert (8) est une bande adhésive (6) qui est collée à l'étape a) sur le côté intérieur (II) de la vitre extérieure (1) ou le côté intérieur (III) de la vitre intérieure (2).

15. Utilisation d'une vitre composite de véhicule selon l'une des revendications 1 à 12 comme pare-brise d'un véhicule, dans laquelle, sur le côté extérieur (IV) de la vitre intérieure (2), est fixé un détecteur optique (7) qui est orienté avec l'angle de coin (a) vers la zone de détection (9) de la vitre composite et qui est une caméra optique.
